# EUROPÄISCHE PATENTANMELDUNG

(11) **EP 3 656 798 A1**
(43) Veröffentlichungstag der Anmeldung: **27.05.2020**
(21) Anmeldenummer: 18207956.6
(22) Anmeldetag: 23.11.2018
(51) Int. Cl.: C08G 18/72, C08G 18/75, C08G 18/42, C08G 18/10, C09D 175/06, C09J 175/06

(54) **NIEDRIGVISKOSE NCO-PREPOLYMERE MIT GERINGEM REST-MONOMERGEHALT**

(71) Anmelder: Evonik Operations GmbH, 45128 Essen (DE)
(72) Erfinder: SPYROU, Emmanouil, 46514 Schermbeck (DE); LOESCH, Holger, 44627 Herne (DE); KREISCHER, Susanne, 45701 Herten (DE); DIESVELD, Andrea, 48712 Gescher (DE)
(74) Vertreter: Evonik Patent Association

(57) **Zusammenfassung**

Die vorliegende Erfindung betrifft NCO-haltige Prepolymere, herstellbar über Umsetzung von Bis(isocyanatomethylcyclohexyl)methan, mindestens einem leichter flüchtigen Diisocyanat und mindestens einem Polyesterpolyol, Verfahren zu ihrer Herstellung und ihre Verwendung.

## Beschreibung

Polyurethane und Polyharnstoffe sind wertvolle Rohstoffe für die Lack-, Kleb-, Dichtstoff- und Kunststoffindustrie. Ein Weg zu diesen führt über NCO-Prepolymere. Diese können erhalten werden über die Reaktion von Polyolen mit Diisocyanaten, wie z. B. für uretdiongruppenhaltige Diisocyanate in EP 0 669 353 A1, EP 0 669 353 A1, DE 30 30 572 A1, EP 0 639 598 A1 und EP 0 803 524 A1 offenbart.

WO 2009/059848 A1 offenbart NCO-Prepolymere aus Dicyclohexylmethandiisocyanat (H12MDI), IPDI und mindestens einem Polyetherpolyol. Die dort offenbarten NCO-Prepolymere haben jedoch den Nachteil, dass die zugrunde gelegten Polyether bekanntermaßen zum oxidativem Abbau neigen, und daher insbesondere nicht UV-stabil sind. Unter Sonneneinstrahlung zersetzen und verfärben sie sich.

Üblicherweise werden bei der Herstellung der NCO-Prepolymere die Isocyanate im stöchiometrischen Überschuss eingesetzt. Nachteilig ist jedoch der Anteil an nicht umgesetzten Diisocyanat (Rest-Monomergehalt), der zu toxikologischen Problemen führen kann. Besonders kritisch sind dabei nicht umgesetzte leicht flüchtige Diisocyanate. Es hat nicht an Versuchen gefehlt, ihren Anteil herabzusetzen, um toxikologische Probleme zu minimieren. Eine Möglichkeit ist es, den stöchiometrischen Überschuss an Diisocyanaten möglichst gering zu halten. Die Folge sind aber höhere Viskositäten, die die Anwendung solcher Produkte erschweren. Eine andere Möglichkeit besteht in einer nachfolgenden Destillation, um diesen Rest-Monomergehalt destillativ abzutrennen. Dieser kostet aber einen weiteren Verfahrensschritt, zusätzliche Energie und das Produkt wird einer nicht unerheblichen thermischen Belastung unterworfen.

Aufgabe der vorliegenden Erfindung war es daher, NCO-Prepolymere mit niedriger Viskosität und niedrigem Rest-Monomergehalt an leicht flüchtigen Diisocyanaten zugänglich zu machen, ohne aber auf den aufwändigen Schritt der destillativen Abtrennung zurückgreifen zu müssen. Überraschend wurde gefunden, dass Gemische aus Bis(isocyanatomethylcyclohexyl)methan (H12MDI) und leichter flüchtigen Diisocyanaten zusammen mit Polyesterpolyolen zu NCO-Prepolymeren führen, die eine niedrige Viskosität und einen geringen Rest-Monomergehalt an leichter flüchtigen Diisocyanaten besitzen.

Gegenstand der Erfindung sind somit NCO-haltige Prepolymere, die herstellbar sind über Umsetzung von
a) Bis(isocyanatomethylcyclohexyl)methan (H12MDI),
b) mindestens einem leichter flüchtigen Diisocyanat und
c) mindestens einem Polyesterpolyol .

Die erfindungsgemäßen NCO-haltigen Prepolymere lassen sich leicht aus Bis(isocyanatomethylcyclohexyl)methan (H12MDI), mindestens einem leichter flüchtigen Diisocyanat und mindestens einem Polyesterpolyol herstellen. Entsprechende Reaktionsprodukte haben den Vorteil, dass sie direkt eingesetzt werden können, d. h., eine destillative Abtrennung des Restmonomerüberschusses ist nicht erforderlich.

Als Komponente a) Bis(isocyanatomethylcyclohexyl)methan (H12MDI) können prinzipiell alle Isomere eingesetzt werden, und zwar 2,2'-, 2,4'- und/oder 4,4'-Dicyclohexylmethandiisocyanat. Bevorzugt umfasst das Bis(isocyanatomethylcyclohexyl)methan (H12MDI) mindestens 80 Gew.-% des 4,4'-Isomers, bevorzugt 85 - 95 Gew.-%, und 5 bis 20 Gew.-%, bevorzugt 7 - 15 Gew.-%, des 2,4'-Isomers. Vorzugsweise enthält das Bis(isocyanatomethylcyclohexyl)methan (H12MDI) weiterhin einen geringen Anteil an 2,2'-H12MDI von kleiner als 5 Gew.-%, bevorzugt kleiner 1 Gew.-%. Der trans,trans-Gehalt des 4,4'-H12MDI ist bevorzugt kleiner 30 %, bevorzugt von 5 bis 25 %.

Neben H12MDI wird bei der Herstellung der Propolymere noch mindestens ein im Vergleich zu H12MDI leichter flüchtiges Diisocyanat eingesetzt.

Als leichter flüchtige Diisocyanate sind alle aliphatischen und cycloaliphatischen und araliphatischen Diisocyanate geeignet, die einen geringeren Siedepunkt als H12MDI (Sdp.: 413 °C bei Normaldruck - 1013 mbar - aufweisen, ggf. umgerechnet mit Advanced Chem. Develop. Software V11.02 aus 2016 (https://www.sigmaaldrich.com/chemistry/solvents/learningcenter/nomograph.html). So lässt sich der Siedepunkt von Siedepunkt H12MDI von 156-158 °C bei 0,1 Torr gemäß der Literaturangabe von Siefken, Werner; Annalen der Chemie, Justus Liebigs 1949, V562, P75-136 zu dem o.g. Wert umrechnen.

Bevorzugt sind Cyclohexandiisocyanat, Methylcyclohexandiisocyanat, Ethylcyclohexandiisocyanat, Propylcyclohexandiisocyanat, Methyl-diethyl-cyclohexandiisocyanat, Propandiisocyanat, Butandiisocyanat, Pentandiisocyanat (bevorzugt Pentamethylendiisocyanat), Hexandiisocyanat (bevorzugt Hexamethylendiisocyanat (HDI) und 1,5-Diisocyanato-2-methylpentan (MPDI)), Heptandiisocyanat, Octandiisocyanat, Nonandiisocyanat (bevorzugt ein Gemisch aus 1,6-Diisocyanato-2,4,4-trimethylhexan und 1,6-Diisocyanato-2,2,4-trimethylhexan (TMDI)), Nonantriisocyanat (bevorzugt 4-Isocyanatomethyl-1,8-octandiisocyanat (TIN)), Dekandi- und triisocyanat, Undekandi- und -triisocyanat, Dodecandi- und -triisocyanat, Isophorondiisocyanat (IPDI), Isocyanatomethylmethylcyclohexylisocyanat, 2,5(2,6)-Bis(isocyanatomethyl)bicyclo[2.2.1]heptan (NBDI), 1,3-Bis(isocyanatomethyl)cyclohexan (1,3-H₆-XDI) sowie 1,4-Bis(isocyanatomethyl)cyclohexan (1,4-H₆-XDI), Tetramethylxylyendiisocyanat (TMXDI) und Lysindiisocyanatalkylester.

Weiter bevorzugt werden Isophorondiisocyanat, Pentamethylendiisocyanat, Hexamethylendiisocyanat und Trimethylhexamethylendiisocyanat, von letzterem bevorzugt ein Gemisch aus 1,6-Diisocyanato-2,4,4-trimethylhexan und 1,6-Diisocyanato-2,2,4-trimethylhexan. Weiter bevorzugt wird als Komponente b) ein Gemisch mindestens zweier der genannten vier Diisocyanate eingesetzt.

Die Isocyanate b) sind im Vergleich zu H12MDI leichter flüchtig. Grundsätzlich können diese Isocyanate nach verschiedenen Verfahren hergestellt werden. Technisch insbesondere bewährt hat sich die Herstellung durch Phosgenierung von organischen Polyaminen zu den entsprechenden Polycarbaminsäurechloriden und deren thermische Spaltung in organische Polyisocyanate und Chlorwasserstoff. Alternativ können organische Polyisocyanate auch ohne die Verwendung von Phosgen, d. h. nach phosgenfreien Verfahren, hergestellt werden. (Cyclo)aliphatische Diisocyanate wie 1-Isocyanato-3-isocyanatomethyl-3,5,5-trimethylcyclohexan (Isophorondiisocyanat bzw. IPDI) können zugänglich gemacht werden durch Umsetzung der zugrundeliegenden (cyclo)aliphatischen Diamine mit Harnstoff und Alkoholen zu (cyclo)aliphatischen Biscarbaminsäureestern und deren thermische Spaltung in die entsprechenden Diisocyanate und Alkohole.

Das Mischungsverhältnis zwischen H12MDI und der leichter flüchtigen Diisocyanatkomponente(n) beträgt bevorzugt zwischen 90 : 10 und 10 : 90 bezogen auf den Gewichtsanteil der beiden Komponenten a) und b). Bevorzugt wird ein Überschuss an H12MDI eingesetzt, d. h. das Verhältnis ist größer als 55 : 45, weiter bevorzugt größer als 65 : 35, noch weiter bevorzugt größer 75 : 25.

Als Komponente c) wird mindestens ein mindestens difunktioneller hydroxylgruppenhaltiger Polyesterpolyol eingesetzt. Bevorzugt hat der Polyesterpolyol eine OH-Zahl von 10 bis 2000 (in mg KOH/Gramm) eingesetzt. Besonders bevorzugt werden hydroxylgruppenhaltige Polyester mit einer OH-Zahl von 20 bis 150 und einem zahlenmittleren Molekulargewicht von 500 bis 6 000 g/mol.

Das NCO/OH-Verhältnis beträgt bei der Herstellung bevorzugt 10 : 1 bis 1,2 : 1, weiter bevorzugt 5 : 1 bis 1,6 : 1 besonders bevorzugt 3 : 1 bis 1,8 : 1.

Bei der Herstellung der Prepolymere können bevorzugt weitere Hilfsstoffe eingesetzt werden.

Bevorzugte Hilfsstoffe d) sind vor allem nicht protische Lösemittel und in der Polyurethanchemie bekannte Katalysatoren für die NCO-OH-Reaktion (insbesondere metallorganische Verbindungen wie Dibutylzinndilaurat = DBTL oder tertiäre Amine wie Diazabicyclooctan und Triethylamin). Gegenstand der vorliegenden Erfindung ist weiterhin ein Verfahren zur Herstellung der erfindungsgemäßen Prepolymere.

Bei dem Verfahren werden Bis(isocyanatomethylcyclohexyl)methan, mindestens ein leichter flüchtiges Diisocyanat und mindestens ein Polyesterpolyol optional in Gegenwart weiterer Hilfsstoffe umgesetzt.

Als Komponente a) Bis(isocyanatomethylcyclohexyl)methan (H12MDI) können prinzipiell alle Isomere eingesetzt werden, und zwar 2,2'-, 2,4'- und/oder 4,4'-Dicyclohexylmethandiisocyanat. Bevorzugt umfasst das Bis(isocyanatomethylcyclohexyl)methan (H12MDI) mindestens 80 Gew.-% des 4,4'-Isomers, bevorzugt 85 - 95 Gew.-%, und 5 bis 20 Gew.-%, bevorzugt 7 - 15 Gew.-%, des 2,4'-Isomers. Vorzugsweise enthält das Bis(isocyanatomethylcyclohexyl)methan (H12MDI) weiterhin einen geringen Anteil an 2,2'-H12MDI von kleiner als 5 Gew.-%, bevorzugt kleiner 1 Gew.-%. Der trans,trans-Gehalt des 4,4'-H12MDI ist bevorzugt kleiner 30 %, bevorzugt von 5 bis 25 %.

Neben H12MDI wird bei der Herstellung der Propolymere noch mindestens ein im Vergleich zu H12MDI leichter flüchtiges Diisocyanat eingesetzt.

Als leichter flüchtige Diisocyanate sind alle aliphatischen und cycloaliphatischen und araliphatischen Diisocyanate geeignet, die einen geringeren Siedepunkt als H12MDI (Sdp.: 413 °C bei Normaldruck - 1013 mbar - aufweisen, ggf. umgerechnet mit Advanced Chem. Develop. Software V11.02 aus 2016 (https://www.sigmaaldrich.com/chemistry/solvents/learningcenter/nomograph.html) gemäß der Literaturangabe von Siefken, Werner; Annalen der Chemie, Justus Liebigs 1949, V562, P75-136; Siedepunkt H12MDI: 156-158 °C bei 0,1 Torr) aufweisen.

Bevorzugt sind Cyclohexandiisocyanat, Methylcyclohexandiisocyanat, Ethylcyclohexandiisocyanat, Propylcyclohexandiisocyanat, Methyl-diethyl-cyclohexandiisocyanat, Propandiisocyanat, Butandiisocyanat, Pentandiisocyanat (bevorzugt Pentamethylendiisocyanat), Hexandiisocyanat (bevorzugt Hexamethylendiisocyanat (HDI) und 1,5-Diisocyanato-2-methylpentan (MPDI)), Heptandiisocyanat, Octandiisocyanat, Nonandiisocyanat (bevorzugt ein Gemisch aus 1,6-Diisocyanato-2,4,4-trimethylhexan und 1,6-Diisocyanato-2,2,4-trimethylhexan (TMDI)), Nonantriisocyanat (bevorzugt 4-Isocyanatomethyl-1,8-octandiisocyanat (TIN)), Dekandi- und triisocyanat, Undekandi- und -triisocyanat, Dodecandi- und -triisocyanat, Isophorondiisocyanat (IPDI), Isocyanatomethylmethylcyclohexylisocyanat, 2,5(2,6)-Bis(isocyanatomethyl)bicyclo[2.2.1]heptan (NBDI), 1,3-Bis(isocyanatomethyl)cyclohexan (1,3-H₆-XDI) sowie 1,4-Bis(isocyanatomethyl)cyclohexan (1,4-H₆-XDI), Tetramethylxylyendiisocyanat (TMXDI) und Lysindiisocyanatalkylester.

Weiter bevorzugt werden Isophorondiisocyanat, Pentamethylendiisocyanat, Hexamethylendiisocyanat und Trimethylhexamethylendiisocyanat, von letzterem bevorzugt ein Gemisch aus 1,6-Diisocyanato-2,4,4-trimethylhexan und 1,6-Diisocyanato-2,2,4-trimethylhexan. Weiter bevorzugt wird als Komponente b) ein Gemisch mindestens zweier der genannten vier Diisocyanate eingesetzt.

Die Isocyanate b) sind im Vergleich zu H12MDI leichter flüchtig. Grundsätzlich können diese Isocyanate nach verschiedenen Verfahren hergestellt werden. Technisch insbesondere bewährt hat sich die Herstellung durch Phosgenierung von organischen Polyaminen zu den entsprechenden Polycarbaminsäurechloriden und deren thermische Spaltung in organische Polyisocyanate und Chlorwasserstoff. Alternativ können organische Polyisocyanate auch ohne die Verwendung von Phosgen, d. h. nach phosgenfreien Verfahren, hergestellt werden. (Cyclo)aliphatische Diisocyanate wie 1-Isocyanato-3-isocyanatomethyl-3,5,5-trimethylcyclohexan (Isophorondiisocyanat bzw. IPDI) können zugänglich gemacht werden durch Umsetzung der zugrundeliegenden (cyclo)aliphatischen Diamine mit Harnstoff und Alkoholen zu (cyclo)aliphatischen Biscarbaminsäureestern und deren thermische Spaltung in die entsprechenden Diisocyanate und Alkohole.

Das Mischungsverhältnis zwischen H12MDI und der leichter flüchtigen Diisocyanatkomponente(n) beträgt bevorzugt zwischen 90 : 10 und 10 : 90 bezogen auf den Gewichtsanteil der beiden Komponenten a) und b). Bevorzugt wird ein Überschuss an H12MDI eingesetzt, d. h. das Verhältnis ist größer als 55 : 45, weiter bevorzugt größer als 65 : 35, noch weiter bevorzugt größer 75 : 25.

Als Komponente c) wird mindestens ein mindestens difunktioneller hydroxylgruppenhaltiger Polyesterpolyol eingesetzt. Bevorzugt hat der Polyesterpolyol eine OH-Zahl von 10 bis 2000 (in mg KOH/Gramm) eingesetzt. Besonders bevorzugt werden hydroxylgruppenhaltige Polyester mit einer OH-Zahl von 20 bis 150 und einem zahlenmittleren Molekulargewicht von 500 bis 6 000 g/mol.

Bevorzugte Hilfsstoffe d) sind vor allem nicht protische Lösemittel und in der Polyurethanchemie bekannte Katalysatoren für die NCO-OH-Reaktion (insbesondere metallorganische Verbindungen wie Dibutylzinndilaurat = DBTL oder tertiäre Amine wie Diazabicyclooctan und Triethylamin).

Diese Reaktion kann mit oder ohne Lösemittel stattfinden. Bevorzugt wird kein Lösemittel eingesetzt. Bevorzugt wird sie weiterhin zwischen 40 und 80 °C und in Gegenwart eines Katalysators durchgeführt.

Als Reaktionsaggregate eignen sich alle üblichen Apparaturen, Kessel, Statik-Mischer, Extruder usw. vorzugsweise Aggregate, die über eine Misch- oder Rührfunktion verfügen.

Das NCO/OH Verhältnis beträgt bevorzugt 10 : 1 bis 1,2 : 1, weiter bevorzugt 5 : 1 bis 1,6 : 1, besonders bevorzugt 3 : 1 bis 1,8 : 1.

Vorteilhaft werden die Diisocyanate a) und b) vorgelegt und die Polyolkomponente portionsweise dazu gegeben.

Das erfindungsgemäße Verfahren wird bevorzugt so geführt, dass das Reaktionsprodukt bevorzugt einen Rest-Monomergehalt an der leichter flüchtigen Diisocyanatkomponente von maximal 6,2 %, bevorzugt <2,5 % und besonders bevorzugt <0,5 % bestimmt über GC aufweist. Weiterhin beträgt der Anteil an Restmonomer H12MDI bevorzugt weniger als 33 %, bevorzugt <6,6 %. Die Viskosität kann gesteuert werden über den eingesetzten Polyol und das NCO:OH Verhältnis. Bevorzugt wird das Verfahren so geführt, dass die Viskosität des resultierenden Produktes kleiner ist als bei der Verwendung von reinem H12MDI bei gleichem NCO-Verhältnis.

Gegenstand der vorliegenden Erfindung ist weiterhin die Verwendung der erfindungsgemäßen Prepolymere und/oder der nach dem erfindungsgemäßen Verfahren herstellbaren Produkte als Bestandteil von Lack-, Klebstoff-, Dichtstoff- oder Kunststoffformulierungen.

### Beispiele:

### Beispiel 1, erfindungsgemäß:

Ein Gemisch aus 80 g VESTANAT H12MDI (Sdp.: 413 °C. bei 1013 mbar, berechnet wie zuvor ausgeführt) Evonik Industries AG) und 20 g VESTANAT IPDI (Sdp.: 303,7 °C, Evonik Industries AG) werden in einem gerührten Dreihalskolben auf 40 °C geheizt und mit 0,05 g Katalysator (Dibutylzinndilaurat, DBTL) versetzt. Dazu werden 207 g Oxyester T1136 (Polyesterpolyol, OH-Zahl 107 mg KOH/g, Evonik Industries) zugetropft (NCO : OH = 2:1). Auch nach der Zugabe wird die Temperatur 4 h bei 40 °C gehalten. Das Produkt hat eine NCO-Zahl von 5,3 %, einen Rest-Monomergehalt an IPDI von 0,17 %, einen Rest-Monomergehalt an H12MDI von 3,9 % und eine Viskosität (23 °C) von 760 Pas.

### Beispiel 2, nicht erfindungsgemäß:

100 g VESTANAT H12MDI (Sdp.: 413 °C. bei 1013 mbar, berechnet wie zuvor ausgeführt) Evonik Industries AG) wird in einem gerührten Dreihalskolben auf 40 °C geheizt und mit 0,05 g Katalysator (Dibutylzinndilaurat, DBTL) versetzt. Dazu werden 200 g Oxyester T1136 (Polyesterpolyol, OH-Zahl 107 mg KOH/g, Evonik Industries) zugetropft (NCO : OH = 2:1). Auch nach der Zugabe wird die Temperatur 4 h bei 40 °C gehalten. Das Produkt hat eine NCO-Zahl von 5,1 %, einen Rest-Monomergehalt an H12MDI von 4,0 % und eine Viskosität (23 °C) von 3000 Pas.

### Beispiel 3, nicht erfindungsgemäß:

100 g VESTANAT IPDI (Sdp.: 303,7 °C, Evonik Industries AG) werden in einem gerührten Dreihalskolben auf 40 °C geheizt und mit 0,05 g Katalysator (Dibutylzinndilaurat, DBTL) versetzt. Dazu wird 236 g Oxyester T1136 (Polyesterpolyol, OH-Zahl 107 mg KOH/g, Evonik Industries) zugetropft (NCO : OH = 2:1). Auch nach der Zugabe wird die Temperatur 4 h bei 40 °C gehalten. Das Produkt hat eine NCO-Zahl von 5,1 %, einen Rest-Monomergehalt an IPDI von 1,33%, und eine Viskosität (23 °C) von 820 Pas.

| | **IPDI Rest-Monomer** | **H12MDI Rest-Monomer** | **Viskosität** |
|---|---|---|---|
| Beispiel 1 | 0,17 | 3,9 | 760 |
| Beispiel 2* | 0 | 4,0 | 3000 |
| Beispiel 3* | 1,33 | 0 | 820 |

| | | | |
|---|---|---|---|
| *nicht erfindungsgemäß | | | |

Lediglich das erfindungsgemäße Beispiel weist sowohl einen niedrigen Rest-Monomergehalt an IPDI auf als auch eine niedrige Viskosität.

## Patentansprüche

1. NCO-haltiges Prepolymer, herstellbar über Umsetzung von
a. Bis(isocyanatomethylcyclohexyl)methan,
b. mindestens einem leichter flüchtigen Diisocyanat und
c. mindestens einem Polyesterpolyol.

2. Prepolymer nach Anspruch 1, **dadurch gekennzeichnet, dass** das Bis(isocyanatomethylcyclohexyl)methan mindestens 80 Gew.-% des 4,4'-Isomers, und 5 bis 20 Gew.-% des 2,4'-Isomers umfasst.

3. Prepolymer nach Anspruch 1 oder 2, **dadurch gekennzeichnet, dass** das Diisocyanat ausgewählt aus der Gruppe bestehend aus Cyclohexandiisocyanat, Methylcyclohexandiisocyanat, Ethylcyclohexandiisocyanat, Propylcyclohexandiisocyanat, Methyl-diethyl-cyclohexandiisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, Dekandi- und triisocyanat, Undekandi- und -triisocyanat, Dodecandi- und - triisocyanat, Isophorondiisocyanat (IPDI), Isocyanatomethylmethylcyclohexylisocyanat, 2,5(2,6)-Bis(isocyanatomethyl)bicyclo[2.2.1]heptan (NBDI), 1,3-Bis(isocyanatomethyl)cyclohexan (1,3-H₆-XDI) sowie 1,4-Bis(isocyanatomethyl)cyclohexan (1,4-H₆-XDI), Tetramethylxylyendiisocyanat (TMXDI) und Lysindiisocyanatalkylester ist.

4. Prepolymer nach einem der vorhergehenden Ansprüche, **dadurch gekennzeichnet, dass** das Diisocyanat Isophorondiisocyanat, Pentamethylendiisocyanat, Hexamethylendiisocyanat und/oder Trimethylhexamethylendiisocyanat ist.

5. Prepolymer nach einem der vorhergehenden Ansprüche, **dadurch gekennzeichnet, dass** das Massenverhältnis von Bis(isocyanatomethylcyclohexyl)methan a) zu allen Diisocyanaten b) zwischen 90 : 10 und 10 : 90 liegt.

6. Prepolymer nach einem der vorhergehenden Ansprüche, **dadurch gekennzeichnet, dass** der Polyesterpolyol eine OH-Zahl von 20 bis 150 und ein zahlenmittleres Molekulargewicht von 500 bis 6 000 g/mol hat.

7. Verfahren zur Herstellung eines NCO-haltigen Prepolymers, **dadurch gekennzeichnet, dass**
a. Bis(isocyanatomethylcyclohexyl)methan,
b. mindestens ein leichter flüchtiges Diisocyanat und
c. mindestens ein Polyesterpolyol
d. optional in Gegenwart weiterer Hilfsstoffe umgesetzt werden.

8. Verfahren nach Anspruch 7, **dadurch gekennzeichnet, dass** es lösemittelfrei durchgeführt wird.

9. Verfahren nach Anspruch 7 oder 8, **dadurch gekennzeichnet, dass** es bei einer Temperatur von 40 und 80 °C und in Gegenwart eine Katalysators durchgeführt wird.

10. Verfahren nach einem der Ansprüche 7 bis 9, **dadurch gekennzeichnet, dass** das NCO/OH-Verhältnis 10 : 1 bis 1,2 : 1 beträgt.

11. Verfahren nach einem der Ansprüche 7 bis 10, **dadurch gekennzeichnet, dass** das die Diisocyanate a) und b) vorgelegt und die Polyolkomponente portionsweise dazu gegeben werden.

12. Verwendung eines Prepolymers nach einem der Ansprüche 1 bis 6 und/oder eines nach einem Verfahren nach einem der Ansprüche 7 bis 11 hergestellten Prepolymers als Bestandteil von Lack-, Klebstoff-, Dichtstoff- oder Kunststoffformulierungen.
